# EUROPÄISCHE PATENTSCHRIFT

(11) **EP 0 362 495 B1**
(45) Veröffentlichungstag und Bekanntmachung des Hinweises auf die Patenterteilung: **20.10.1993**
(21) Anmeldenummer: 89112792.0
(22) Anmeldetag: 13.07.1989
(51) Int. Cl.: H02H 7/08, H02P 5/418

(54) **Elektrische Steuerschaltung eines Universalmotors**
Electrical control circuit for a universal motor
Circuit de commande pour un moteur universel

(30) Priorität: 04.10.1988 DE 3833701
(43) Veröffentlichungstag der Anmeldung: 11.04.1990
(73) Patentinhaber: AKO-Werke GmbH & Co, D-7988 Wangen/Allgäu (DE)
(72) Erfinder: Schotten, Henno, Dipl.-Ing., D-7989 Argenbühl-Ratzenried (DE)
(74) Vertreter: Gaiser, Hartmut, Dipl.-Ing.

(56) Entgegenhaltungen:
- EP-A- 0 162 423
- EP-A- 0 165 864
- DE-A- 3 306 676

## Beschreibung

Die Erfindung betrifft eine elektrische Steuerschaltung eines Universalmotors mit einer Ankerwicklung und einer Feldwicklung, wobei ein elektronischer Schalter zur Phasenanschnittsteuerung der Drehzahl und eine Wenderelaisanordnung zum Schalten der Drehrichtung und eine in Reihe zum elektronische Schalter liegende Sicherung vorgesehen sind.

Solche Steuerschaltungen werden beispielsweise bei Waschmaschinen oder Trocknern verwendet. Eine derartige Steuerschaltung ist in der EP 0 165 864 B1 beschrieben. Als elektronischer Schalter ist ein Triac vorgesehen, über den die Drehzahl des Motors gesteuert wird. Bei solchen Steuerschaltungen ist ein Kurzschluß des Triacs nicht ausgeschlossen. In einem solchen Fall steigt der Motorstrom an, ohne daß es notwendigerweise zum Ansprechen einer Sicherung kommt. Die Drehzahl der vom Motor angetriebenen Trommel der Waschmaschine steigt dadurch unkontrolliert hoch an. Außerdem wird über die Wenderelaisanordnung die Drehrichtung umgeschaltet. Dies ist eine schädliche Belastung für die Maschine. Besonders gefährlich wird ein solcher Betriebszustand dann, wenn die Maschine wassergefüllt ist oder die Trommel unwuchtig beladen ist. Im ersten Fall wird Wasser aus einer Waschmittelschublade gedrückt. Im zweiten Fall kann die Maschine wandern oder durch Anschlagen eines Bottichs, in dem die Trommel läuft, an das Gehäuse der Maschine beschädigt werden.

In der EP 0 165 864 B1 ist ein die Ankerwicklung überbrückender Schaltzweig vorgesehen, der die Ankerwicklung kurzschließt, wenn ein Kurzschluß am ersten Triac auftritt. Dadurch wird der im Kurzschlußfall fließende Strom so erhöht, daß eine Sicherung anspricht und der Motor abschaltet. Eine ähnliche Schaltung ohne Wenderelaisanordnung ist in der DE 31 19 794 C2 beschrieben. Dort wird beim Kurzschluß des von einem Thyristor gebildeten elektronischen Schalters die Ankerwicklung und eine Feldwicklung kurzgeschlossen, um in diesem Fall eine Sicherung ansprechen zu lassen.

Die bei der EP 0 165 864 B1 vorgesehene Wenderelaisanordnung ist aufwendig, da sie mit vier Schaltkontakten arbeitet.

Eine Steuerschaltung mit einem Mikroprozessor und einer Wendelrelaisanordnung mit zwei Umschaltkontakten ist in der DE-OS 34 19 408 beschrieben.

Aufgabe der Erfindung ist es, eine Steuerschaltung der eingangs genannten Art hinsichtlich der Wenderelaisanordnung zu vereinfachen und einen Schutz für den Fall des Kurzschlusses des elektronischen Schalters zu erreichen.

Erfindungsgemäß ist obige Aufgabe bei einer Steuerschaltung der eingangs genannten Art dadurch gelöst, daß die Wenderelaisanordnung einen einzigen Wende-Umschaltkontakt aufweist und dieser wahlweise an eines der beiden Enden einer Wicklung anschaltbar ist und daß an dieser Wicklung an beiden Enden jeweils ein elektronischer Schalter liegt, wobei jeweils der dem Ende der Wicklung, an das der Umschaltkontakt angeschaltet ist, abgewandte elektronische Schalter die Phasenanschnittsteuerung vornimmt und der andere elektronische Schalter gesperrt ist.

Die Wenderelaisanordnung ist hierdurch wesentlich vereinfacht, denn es ist nur ein einziger Wende-Umschaltkontakt vorgesehen. Die beiden elektronischen Schalter übernehmen einen Teil der Wendefunktion und nehmen je nach Drehrichtung wechselweise die Phasenanschnittsteuerung vor. Im Falle des Kurzschlusses eines oder beider elektronischer Schalter wird die Wicklung überbrückt, so daß eine Sicherung auf den dann erhöhten Stromfluß ansprechen kann. Selbst wenn die Sicherung nicht anspricht, ist jedoch eine Schutzwirkung gegeben, da der Motor im Kurzschlußfall nicht mehr seine Drehrichtung umkehren kann.

Die Wicklung, an deren Enden der Umschaltkontakt wahlweise anschaltbar ist, kann die Ankerwicklung oder die Feldwicklung sein.

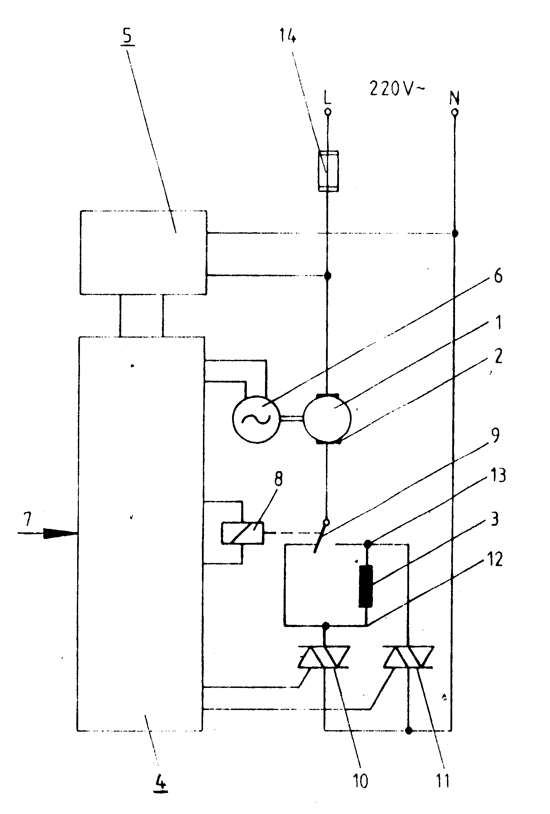

Vorteilhafte Ausgestaltungen der Erfindung ergeben sich aus den Unteransprüchen und der folgenden Beschreibung eines Ausführungsbeispiels. Die Figur zeigt eine elektrische Steuerschaltung eines Universalmotors einer Waschmaschine.

Ein Motor(1) zum Antrieb einer nicht näher dargestellten Trommel einer Waschmaschine ist an das elektrische Netz(L,N) angeschlossen. Der Motor(1) weist eine Ankerwicklung(2) und eine Feldwicklung(3) auf.

Eine Steuereinrichtung(4), die beispielsweise von einem Mikrocomputer gebildet ist, ist von einem Netzteil(5) gespeist. Die Steuereinrichtung(4) erfaßt über einen Tachogenerator(6), der mit der Welle des Motors(1) in Verbindung steht, die Istdrehzahl des Motors(1). An die Steuereinrichtung(4) ist ein Sollwert(7) gelegt. Die Steuereinrichtung(4) steuert ein Wenderelais(8) für die Drehrichtung des Motors(1), das einen Wende-Umschaltkontakt(9) aufweist. Außerdem steuert die Steuereinrichtung(4) einen ersten Triac(10) und einen zweiten Triac(11) in Phasenanschnittsteuerung.

Der Umschaltkontakt(9) ist zwischen die Ankerwicklung(2) und die Feldwicklung(3) geschaltet. Er liegt entweder an dem einen Ende(12) der Feldwicklung(3) oder an deren anderen Ende(13). Der erste Triac(10) liegt zwischen dem einen Ende(12) der Feldwicklung(3) und dem Pol(N) des Netzes. Der zweite Triac(11) liegt zwischen dem anderen Ende(13) der Feldwicklung(3) und dem Pol(N) des Netzes. In Reihe zur Ankerwicklung(2) liegt eine Sicherung(14) am Pol(L) des Netzes.

Die Funktionsweise der beschriebenen Steuerschaltung ist im wesentlichen folgende:
Steht der Umschaltkontakt in der in der Figur dargestellten Stellung, in der er am Ende(12) der Feldwicklung(3) liegt, dann ist über die Steuereinrichtung(4) der Triac(10) gesperrt und der Triac(11) wird entsprechend der gewünschten Solldrehzahl von der Steuereinrichtung(4) gezündet.

Zur Drehrichtungsumkehr wird der Umschaltkontakt so umgeschaltet, daß er am Ende(13) der Feldwicklung(3) anliegt. Gleichzeitig wird der Triac(11) gesperrt und der Triac(10) entsprechend der gewünschten Solldrehzahl gezündet.

Tritt am Triac(10) bei der in der Figur dargestellten Stellung des Umschaltkontakts(9) ein Kurzschluß auf, dann ist die Ankerwicklung(2) über den Triac(10) unter Umgehung der Feldwicklung(3) direkt an den Pol(N) des Netzes gelegt. Dadurch steigt der durch die Sicherung(14) fließende Strom so an, daß diese schmilzt und den Motor(1) vom Netz trennt.

Selbst wenn die Sicherung(14) in diesem Fall nich ansprechen sollte, ist ein Schutz gegen die Auswirkungen des Kurzschlusses des Triacs(10) gegeben. Denn dieser schließt auch die vom Triac(11) an sich durchgeschalteten Netzwellenanteile kurz.

Liegt der Umschaltkontakt(9) am Ende(13) und liegt am Triac(11) ein Kurzschluß vor, dann gilt das oben Ausgeführte entsprechend. Durch den Kurzschluß des Triacs(11) erhöht sich der Strom durch die Sicherung(14), so daß diese anspricht.

Für die Ansteuerung der Triacs(10,11) ist es günstig, daß diese direkt an einem Pol des Netzes liegen. Das beschriebene Ausführungsbeispiel zeigt die Triacs(10,11) an den beiden Enden(12,13) der Feldwicklung(3). Es wäre ebensogut möglich, diese entsprechend an die Ankerwicklung(2) zu schalten.

Steht der Umschaltkontakt(9) in der in der Figur gezeigten Stellung und der Triac(10) ist in Ordnung und der Triac(11) hat einen Kurzschluß, dann sind zwei Fälle möglich:
Der erste Fall ist der Fall, daß das Programm im Programmschritt "Waschen" arbeitet. Die Trommel wird dann in einer Richtung beschleunigt, bis das Wenderelais(8) geschaltet wird. Dadurch wird der Umschaltkontakt(9) umgeschaltet, so daß sich nun der Stromkreis über den Triac(11) mit Kurzschluß, den Umschaltkontakt(9) und die Ankerwicklung(2), sowie die Sicherung(14) schließt. Die Sicherung(14) schmilzt nun.

Der zweite Fall liegt vor, wenn sich das Programm im Programmschritt "Schleudern" befindet. In diesem Programmschritt läuft die Wasser-Entleerungspumpe. Entspricht die gezeichnete Stellung des Umschaltkontakts(9) der Schleuderrichtung, dann läuft die Trommel, wegen des Kurzschlusses des Triacs(11) zwar ungesteuert auf maximale Drehzahl hoch. Die Sicherung(14) spricht nicht an. Dieser Betriebsfall ist jedoch nicht kritisch, weil das Wasser aus der Trommel abgepumpt wird und die Trommel nicht in die umgekehrte Drehrichtung geschaltet wird.

## Patentansprüche

1. Elektrische Steuerschaltung eines Universalmotors (1) mit einer Ankerwicklung (2) und einer Feldwicklung (3), wobei ein elektronischer Schalter (10,11) zur Phasenanschnittsteuerung der Drehzahl und eine Wenderelaisanordnung (8) zum Schalten der Drehrichtung und eine in Reihe zum elektronischen Schalter liegende Sicherung (14) vorgesehen sind, dadurch gekennzeichnet, daß die Wendelrelaisanordnung einen einzigen Wende-Umschaltkontakt(9) aufweist und dieser wahlweise an eines der beiden Enden(12,13) einer Wicklung(3) anschaltbar ist und daß an dieser Wicklung(3) an beiden Enden(12,13) jeweils ein elektronischer Schalter(10,11) liegt, wobei jeweils der dem Ende(12 bzw. 13) der Wicklung(3), an das der Umschaltkontakt(9) angeschaltet ist, abgewandte elektronische Schalter(11,10) die Phasenanschnittsteuerung vornimmt und der andere elektronische Schalter(10,11) gesperrt ist.

2. Steuerschaltung nach Anspruch 1, dadurch gekennzeichnet, daß der Umschaltkontakt(9) zwischen der Ankerwicklung(2) und der Feldwicklung(3) liegt.

3. Steuerschaltung nach Anspruch 1 oder 2, dadurch gekennzeichnet, daß der Umschaltkontakt(9) an die Enden(12,13) der Feldwicklung(3) anschaltbar ist.

4. Steuerschaltung nach einem der vorhergehenden Ansprüche, dadurch gekennzeichnet, daß beide elektronische Schalter(10,11) am gleichen Pol(N) der Netzwechselspannung liegen.

5. Steuerschaltung nach einem der vorhergehenden Ansprüche, dadurch gekennzeichnet, daß die elektronischen Schalter von Triacs(10,11) gebildet sind.

## Claims

1. Electric control circuit for a universal motor (1), having an armature winding (2) and a field winding (3), wherein an electronic switch (10, 11) for the operating angle control of the revolution count, a helical relay device (8) for changing the direction of rotation, and a fuse (14) lying in series with the electronic switch are provided, characterised in that the helical relay device has a single reversing change-over contact (9), and this is selectively connectable to one of the two ends (12, 13) of the winding (3), and in that a respective electronic switch (10, 11) lies at each end (12, 13) of this winding (3), in which case the electronic switch (11, 10) remote from the end (12 or 13 respectively) of the winding (3) to which the change-over contact (9) is connected effects the operating angle control, and the other electronic switch (10, 11) is locked.

2. Control circuit according to claim 1, characterised in that the change-over contact (9) lies between the armature winding (2) and the field winding (3).

3. Control circuit according to claim 1 or 2, characterised in that the change-over contact (9) is connectable to the ends (12, 13) of the field winding (3).

4. Control circuit according to one of the preceding claims, characterised in that the two electronic switches (10, 11) lie at the same pole (N) of the mains alternating voltage.

5. Control circuit according to one of the preceding claims, characterised in that the two electronic switches are formed of triacs (10, 11).

## Revendications

1. Circuit électrique de commande d'un moteur universel (1) comprenant un enroulement d'induit (2) et un enroulement de champ (3), circuit dans lequel sont prévus un interrupteur électronique (10, 11) pour la commande par coupe de phase de la vitesse de rotation, un système de relais inverseurs (8) pour la commutation du sens de rotation et un fusible (14) placé en série avec l'interrupteur électronique, caractérisé en ce que le système de relais inverseurs présente un seul contact inverseur à permutation (9) et celui-ci est commutable, de manière sélective, à l'une des deux extrémités (12, 13) d'un enroulement (3) et qu'au niveau des deux extrémités (12, 13) de cet enroulement (3) se trouve, à chaque fois, un interrupteur électronique (10, 11), l'interrupeur électronique (11, 10) détourné de l'extrémité (12 ou 13) de l'enroulement (3), à laquelle est commuté le contact à permutation (9), se chargeant alors de la commande par coupe de phase et l'autre interrupteur (10, 11) électronique étant bloqué.

2. Circuit de commande selon la revendication 1, caractérisé en ce que le contact à permutation (9) se trouve entre l'enroulement d'induit (2) et l'enroulement de champ (3).

3. Circuit de commande selon la revendication 1 ou 2, caractérisé en ce que le contact à permutation (9) est commutable aux extrémités (12, 13) de l'enroulement de champ (3).

4. Circuit de commande selon l'une des revendications précédentes, caractérisé en ce que les deux interrupteurs électroniques (10, 11) sont appliqués au même pôle (N) de la tension alternative du réseau.

5. Circuit de commande selon l'une des revendications précédentes, caractérisé en ce que les interrupteurs électroniques sont constitués par des triacs (10, 11).
